(19) Europäisches Patentamt / European Patent Office / Office européen des brevets

(11) **EP 4 700 857 A1**

(12) **EUROPEAN PATENT APPLICATION**
published in accordance with Art. 153(4) EPC

(43) Date of publication:
**25.02.2026 Bulletin 2026/09**

(21) Application number: 23933639.9

(22) Date of filing: **12.07.2023**

(51) International Patent Classification (IPC):
**H01M 4/36** (2006.01)     **H01M 4/485** (2010.01)
**H01M 4/505** (2010.01)     **H01M 4/525** (2010.01)
**H01M 10/054** (2010.01)

(52) Cooperative Patent Classification (CPC):
Y02E 60/10

(86) International application number:
**PCT/CN2023/106852**

(87) International publication number:
**WO 2024/216766 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **21.04.2023  CN 202310435218**

(71) Applicant: **Institute of Physics, Chinese Academy
of Sciences
Beijing 100190 (CN)**

(72) Inventors:
• **HU, Yongsheng
  Beijing 100190 (CN)**

• **DANG, Rongbin
  Beijing 100190 (CN)**
• **RONG, Xiaohui
  Beijing 100190 (CN)**
• **ZHOU, Lin
  Beijing 100190 (CN)**
• **LU, Yaxiang
  Beijing 100190 (CN)**
• **ZHOU, Quan
  Beijing 100190 (CN)**
• **CHEN, Liquan
  Beijing 100190 (CN)**

(74) Representative: **Glück Kritzenberger
Patentanwälte PartGmbB
Franz-Mayer-Str. 16a
93053 Regensburg (DE)**

(54) **HIGH-ENTROPY LAYERED OXIDE HAVING ANION/CATION COVARIANCE, PREPARATION METHOD THEREFOR, AND USE THEREOF**

(57)    A high-entropy layered oxide material having anion/cation covariance, a preparation method therefor, and a use thereof. The chemical general formula of the high-entropy layered oxide material is $Na_a[Li_bMg_cNi_dM-n_eMf]O_{2+\beta}$; wherein M is a transition metal element comprising one or more of the elements Cu, Fe, Zn, Nb, Mo, Ru, Sb, Ta, Bi, Tia, La, and W; a, b, c, d, e, f, and $2+\beta$ are respectively the molar ratios occupied by the corresponding elements; the relationships between a, b, c, d, e, f, and $2+\beta$ satisfy $b+c+d+e+f=1$ and $a+b+2c+2d+4e+mf=2(2+\beta)$, wherein $0.85 \leq a \leq 1$; $0.05 \leq b \leq 0.2$; $0.05 \leq c \leq 0.2$; $0.05 \leq d \leq 0.2$; $0.2 \leq e \leq 0.6$; $0.05 \leq f \leq 0.2$; $0 \leq \beta \leq 0.1$, and m is the valence state of M; and a, b, c, d, e, and f satisfy the definition of high entropy, that is, satisfy the formula:

$$S = -R\sum_{i=1}^{N} x_i \ln x_i \geq 1.5R$$

, wherein R is a gas constant, $N \geq 6$, $x_i$ is any of the values of a, b, c, d, e, and f ; the high-entropy layered oxide material is an O3-phase layered oxide material, the space group is R3m, and the high-entropy layered oxide material is used for a positive electrode active matireal of a sodium ion secondary battery.

EP 4 700 857 A1

FIG. 5

**Description**

CROSS-REFERENCE OF RELATED APPLICATION

The application claims priority to Chinese Patent Application No. 202310435218.9, filed on April 21, 2023 and entitled "high-entropy layered oxide material having an anion/cation covalence, and preparation method and use".

BACKGROUND OF THE INVENTION

1. Technical Field

The present invention relates to the technical field of materials, and in particular, to a high-entropy layered oxide having an anion/cation covalence, and a preparation method therefor and use thereof.

2. Description of Related Art

Under a "carbon peaking and carbon neutrality" background, developing sustainable clean energy (for example, wind energy, solar energy, and tidal energy) is of great significance to reduce carbon emissions. However, these renewable energy sources are greatly limited by natural conditions and have the characteristics of intermittence, fluctuation, and the like. As the most efficient and convenient energy storage and conversion devices, high-performance secondary batteries are crucial to establishing clean energy systems and achieving scaled energy storage. In many energy storage technologies, physical energy storage, for example, pumped storage, compressed air energy storage, and flywheel energy storage, will all be limited by factors such as geographical locations, realistic conditions, and the like. In comparison, electrochemical energy storage, which features easy modularization, high energy conversion efficiency, high flexibility, environmental-friendliness, and the like, is one of the most promising energy storage modes, and is also an important guarantee to achieve the "carbon peaking and carbon neutrality" goal.

At current stage, in the electrochemical energy storage technologies, lithium ion batteries featuring high energy density, long cycle life, small size, light weight, no pollution, and the like have been widely applied in daily life. However, the reserve of lithium resources in the crust is relatively low, and more than half of the lithium resources in the world are distributed in South America. 80% of lithium resources rely on import in China, and the price of lithium carbonate is increased year by year, which has been increased from about 50 thousand per ton in 2015 to about 500 thousand per ton now (2022). Therefore, lithium ion batteries limited by the reserve of lithium resources can hardly support the development of electric mobiles and large-scale energy storage at the same time. Due to the advantages of rich resources, wide distribution, low cost, and the like, sodium ion batteries are regarded as a beneficial supplement for lithium ion batteries, which are one of the ideal devices applied to the large-scale energy storage field. The research and development of the sodium ion battery technology are of strategic importance, and have received wide attention again in recent years.

The development of high-performance electrode materials is crucial to the commercialization of sodium ion batteries. Particularly, positive electrode materials play a decisive role in overall energy density and electrochemical energy of batteries. So far, the research on the sodium ion positive electrode materials is still in an initial stage of laboratory exploration. At present, the research on the positive electrode materials mainly focuses on transition metal oxides $Na_xMO_2$ (M represents one or more of 3d or 4d transition metals) having a layered structure. Further increasing the specific capacity and energy density of the layered oxide material is an effective means of reducing the cost and unlocking more application scenarios of the sodium ion batteries. Enlightened by a "lithium-rich" positive electrode of the lithium ion battery with high specific capacity provided by anionic redox, redox of activating lattice oxygen in a sodium-based oxide opens up a new strategy for improving the energy density of the sodium ion battery. For example, an anionic redox-based P2 type $Na_{0.72}Li_{0.24}Mn_{0.76}O_2$, as a positive electrode of a sodium ion battery, has a high reversible specific capacity (270 mAh/g) and the highest energy density (700 Wh/kg) between 1.5V and 4.5V. However, the redox triggering lattice oxygen with a higher capacity usually needs a relatively high charging cut-off voltage (4.4V), resulting in unnecessary structural deterioration and severe side reactions. Therefore, most oxygen redox-active material electrodes have actual problems such as dynamic hysteresis, voltage hysteresis, oxygen release, severe capacity fading, and the like. These problems greatly hinder the actual application of the oxygen redox-active materials in the sodium ion battery.

BRIEF SUMMARY OF THE INVENTION

Embodiments of the present invention provide a high-entropy layered oxide material having an anion/cation covalence, and a preparation method and use. The present invention mainly provides charge compensation during charging and discharging based on redox-action of cations and anions (lattice oxygen) of transition metals with electrochemical activity. The high entropy of the transition metal is configured, so that the material has excellent structural stability and long-cycle performance. As for a half battery formed by assembling the positive electrode prepared from the material and the metal sodium negative electrode, the capacity is substantially not attenuated after 400 cycles. The cycle life is 4-5 times of that of a common oxygen redox-active material, indicating that the material has excellent cycle stability and cycle life as well as high actual application value. Moreover, the preparation method for the high-entropy layered oxide material provided by the present invention is simple. The sodium ion secondary battery containing the high-entropy oxide material is applied to large-scale energy storage devices of solar power generation, wind power generation, intelligent power grid peak regulation, distributed power stations, back-up power supplies, or communication base stations.

In a first aspect, an embodiment of the present invention provides a high-entropy layered oxide material having an anion/cation covalence, where a chemical general formula of the high-entropy layered oxide material is as follows: $Na_a[Li_bMg_cNi_aMn_eM_f]O_{2+\beta}$,

where M is a transition metal element, including one or more elements of Cu, Fe, Zn, Nb, Mo, Ru, Sb, Ta, Bi, Ti, La, and W; a, b, c, d, e, f, and 2+β are respectively mole percentages occupied by corresponding elements; a relationship among a, b, c, d, e, f, and 2+β satisfies b+c+d+e+f=1 and a+b+2c+2d+4e+mf=2(2+β), where 0.85≤a≤1; 0.05≤b≤0.2; 0.05≤c≤0.2; 0.05≤d≤0.2; 0.2≤e≤0.6; 0.05≤f≤0.2; 0≤β≤0.1, m is a valance state of M;

a, b, c, d, e, and f satisfy a definition of a high entropy, i.e., satisfy a formula:

$$S = -R\sum_{i=1}^{N} x_i \ln x_i \geq 1.5R$$

where R is a gas constant, N≥6 and $x_i$ is any value of a, b, c, d, e, and f;

the high-entropy layered oxide material is an O3-phase layered oxide material, with a space group of R$\overline{3}$m; and

the high-entropy layered oxide material is used for a positive electrode active material of a sodium ion secondary battery; during initial cycle charging, the M transition metal ion with electrochemical activity loses an electron first, then an oxygen ion in a lattice loses an electron, and an average valance state of the oxygen ion is increased from -2 to a valance state between -2 and -1; during initial cycle discharging, the M transition metal ion with electrochemical activity and the oxygen ion with a relatively high valance state re-acquires the electron; from a second cycle, the oxygen ion and the M transition metal ion with electrochemical activity acquire and lose the electron during charging and discharging.

In a second aspect, an embodiment of the present invention provides a method for preparing the high-entropy layered oxide material having an anion/cation covalence in the first aspect, where the method is a solid phase method, including:

mixing a sodium source material with a stoichiometric ratio of 100-108% of needed sodium, a lithium source material with a stoichiometric ratio of 100-108% of needed lithium, a magnesium source material, a nickel source material, and a manganese source material with a compound of M at needed stoichiometric ratios in proportion, and uniformly mixing the mixture to obtain a precursor powder; and putting the obtained precursor powder in a crucible, placing the crucible in a high-temperature furnace, performing a thermal treatment in an air atmosphere, and performing grinding after cooling discharge to obtain the high-entropy layered oxide material having an anion/cation covalence.

Preferably, the sodium source material is sodium carbonate;

the lithium source material includes lithium carbonate and/or lithium hydroxide; the magnesium source material includes magnesium oxide and/or magnesium carbonate; the nickel source material is nickel oxide; the manganese source material is manganese dioxide and/or manganese sesquioxide; and the compound of M includes an oxide of M and/or a carbonate of M, where M is a transition metal element, including one or more elements of Cu, Fe, Zn, Nb, Mo, Ru, Sb, Ta, Bi, Ti, La, and W; the method of uniformly mixing is grinding mixing or ball-mill mixing; and the thermal treatment comprises: thermal treatment at a temperature of 800-1000°C for 2-24 hours.

In a third aspect, an embodiment of the present invention provides a method for preparing the high-entropy layered oxide material having an anion/cation covalence according to first aspect, where the method is a sol-gel method, including:

respectively dissolving a sodium source material with a stoichiometric ratio of 100-108% of needed sodium, a lithium-containing water soluble salt or tetrabutyl titanate with a needed stoichiometric ratio of 100-108%, and a magnesium, nickel, manganese, and M-containing water soluble salt or tetrabutyl titanate with a needed stoichiometric ratio in a solvent, and adding citric acid to form a precursor gel; placing the precursor gel in a crucible, putting the crucible in a high temperature furnace, and performing low-temperature pre-treatment in an air atmosphere to obtain a pre-treated powder; and performing high-temperature thermal treatment on the pre-treated powder in the air atmosphere, and grinding the mixture after performing cooling and discharging to obtain the high-entropy layered oxide material having an anion/cation covalence.

Preferably, the sodium source material is one or more of sodium acetate, sodium nitrate, sodium carbonate, and sodium sulfate;

M is a transition metal element, including one or more elements of Cu, Fe, Zn, Nb, Mo, Ru, Sb, Ta, Bi, Ti, La, and W;
the solvent comprises anhydrous ethanol or deionized water;
the low-temperature thermal treatment includes: pre-sintering at a temperature of 250-500°C for 2-6 hours; and
the high-temperature thermal treatment includes: thermal treatment at a temperature of 800-1000°C for 2-24 h.

In a fourth aspect, an embodiment of the present invention provides a method for preparing the high-entropy layered oxide material having an anion/cation covalence in the first aspect, where the method is a spray drying method, including:

mixing a sodium source material with a stoichiometric ratio of 100-108% of needed sodium, a lithium source material with a stoichiometric ratio of 100-108% of needed lithium, a magnesium source material, a nickel source material, and a manganese source material with a compound of M at needed stoichiometric ratios in proportion, and uniformly mixing the mixture to obtain a precursor;
adding the precursor into a solvent at a certain proportion and uniformly stirring the mixture to form a slurry;
putting the slurry in a spray drier for spray drying to obtain a precursor powder;
placing the precursor powder in the crucible, putting the crucible in the high temperature furnace, and performing thermal treatment in the air atmosphere; and
grinding the precursor powder after the thermal treatment to obtain the high-entropy layered oxide material.

Preferably, the sodium source material is sodium carbonate;

the lithium source material includes lithium carbonate and/or lithium hydroxide;
the magnesium source material includes magnesium oxide and/or magnesium carbonate;
the nickel source material is nickel oxide;
the manganese source material is manganese dioxide and/or manganese sesquioxide; and
the compound of M includes an oxide of M and/or a carbonate of M, where M is a transition metal element, including one or more elements of Cu, Fe, Zn, Nb, Mo, Ru, Sb, Ta, Bi, Ti, La, and W;
the method of uniformly mixing is grinding mixing or ball-mill mixing; and
the solvent includes anhydrous ethanol or deionized water;
the thermal treatment method includes: thermal treatment at a temperature of 800-1000°C for 2-24 hours.
an inlet temperature of the spray drier is 150-190°C, an outlet temperature is 70-100°C, and a feed rate is 200-600 mL/hour.

In a fifth aspect, an embodiment of the present invention provides a positive electrode plate of a sodium ion secondary battery, including a current collector, a conductive additive, and a binder coated on the current collector, and the high-entropy layered oxide material having an anion/cation covalence in the first aspect.
In a sixth aspect, an embodiment of the present invention includes a sodium ion secondary battery, including the positive electrode in the fifth aspect.
In a seventh aspect, an embodiment of the present invention provides use of the sodium ion secondary battery in the sixth aspect, where the sodium ion secondary battery is applied to a mobile device, means of transportation, and energy storage devices of renewable energy power generation, intelligent power grid peak regulation, distributed power stations, back-up power supplies or communication base stations.
Elements in the transition metal layer of the high-entropy layered oxide material having an anion/cation covalence provided by the embodiment are disorderly distributed. During charging, nickel and transition metal element M provide charge compensation first and then lattice oxygen provides charge compensation. The configuration of high entropy of the transition metal effectively reduces the initial voltage of oxygen redox-action, so that the material is charged to 4.2V, the charging process has been completed, which avoids severe decomposition of the electrolyte solution since the conventional oxygen redox-active material needs to be charged to above 4.2V and provides a specific capacity of about 200 mAh/g; in addition, the configuration of high entropy may alleviate the structural change of the material, making the material show excellent structural stability. Finally, the material shows excellent long cycle stability, and under the 1C charge and discharge condition, after 400 times of cycles, the material still maintain over 95% capacity retention ratio and has huge use value. The sodium ion secondary battery applying the high-entropy oxide material is applied to storage devices for intelligent power grid peak regulation such as new energy power generation, and back-up power supplies, or communication base stations.
Embodiments of the present invention provide a method for preparing the high-entropy layered oxide material having an anion/cation covalence, which is convenient to operate and easy to realize scaled production.

## BRIEF DESCRIPTION OF THE SEVERAL VIEWS OF THE DRAWINGS

The technical solution of the present invention will be further described in detail with reference to drawings and embodiments.

FIG. 1 is a schematic diagram of a high-entropy configuration of interlayer elements of a high-entropy layered oxide material provided in an embodimentof the present invention;

FIG. 2 is a flowchart of a method for preparing the high-entropy layered oxide material by a solid phase method provided in an embodiment of the present invention;

FIG. 3 is a flowchart of a method for preparing the high-entropy layered oxide material by a sol-gel method provided in an embodiment of the present invention;

FIG. 4 is a flowchart of a method for preparing the high-entropy layered oxide material by a spray drying method provided in an embodiment of the present invention;

FIG. 5 is an X-ray diffraction (XRD) pattern of the high-entropy layered oxide material provided in Embodiments1-5 of the present invention;

FIG. 6 is a (100) zone-axis corrected spherical aberration TEM image of the high-entropy layered oxide material provided in embodiment1 of the present invention;

FIG. 7 is a initial cycle charging and discharging curve chart of a sodium ion secondary battery provided in embodiment1;

FIG. 8 is a cycle capacity curve chart of a sodium ion secondary battery provided in embodiment 1;

FIG. 9 is a initial cycle charging and discharging curve chart of a sodium ion secondary battery provided in embodiment2;

FIG. 10 is a initial cycle charging and discharging curve of a sodium ion secondary battery provided in embodiment3;

FIG. 11 is a initial cycle charging and discharging curve chart of a sodium ion secondary battery provided in embodiment 4;

FIG. 12 is a initial cycle charging and discharging curve chart of a sodium ion secondary battery provided in embodiment 5; and

FIG. 13 is a initial cycle charging and discharging curve chart of a sodium ion secondary battery provided in embodiment 6.

## DETAILED DESCRIPTION OF THE INVENTION

The present invention will be further described in detail below through drawings and specific embodiments. But it should be understood that these embodiments are merely used for a more detailed description, rather than limiting the present invention in any form, i.e.,

these embodiments are not intended to limit the protection scope of the present invention.

An embodiment of the present invention provides a high-entropy layered oxide material having an anion/cation covalence, where a chemical general formula of the high-entropy layered oxide material is as follows: $Na_a[Li_bMg_cNi_aMn_eM_f]O_{2+\beta}$, where M is a transition metal element, including one or more elements of Cu, Fe, Zn, Nb, Mo, Ru, Sb, Ta, Bi, Ti, La, and W; a, b, c, d, e, f, and 2+β are respectively mole percentages occupied by corresponding elements; a relationship among a, b, c, d, e, f, and 2+β satisfies b+c+d+e+f=1 and a+b+2c+2d+4e+mf=2(2+β), where 0.85≤a≤1; 0.05≤b≤0.2; 0.05≤c≤0.2; 0.05≤d≤0.2; 0.2≤e≤0.6; 0.05≤f≤0.2; 0≤β≤0.1, m is a valance state of M;

a, b, c, d, e, and f satisfy a definition of a high entropy, i.e., satisfy a requirement of the following formula:

$$S = -R\sum\nolimits_{i=1}^{N} x_i \ln x_i \geq 1.5R$$

where R is a gas constant, N≥6 and $x_i$ is any value of a, b, c, d, e, and f;

It is to be noted that the gas constant is equivalent to the Boltzmann constant, and the gas constant value is 8.314 J/(mol.K).

$x_{1...}x_N$ respectively represent mole percentages of Na, Li, Mg, Ni, Mn, and M.

$x_i \ln x_i$ in the above formula is a repeatable value to reflect the degree of disorder of transition metals Li, Mg, Ni, Mn, and M in the transition metal layer of the high-entropy oxide.

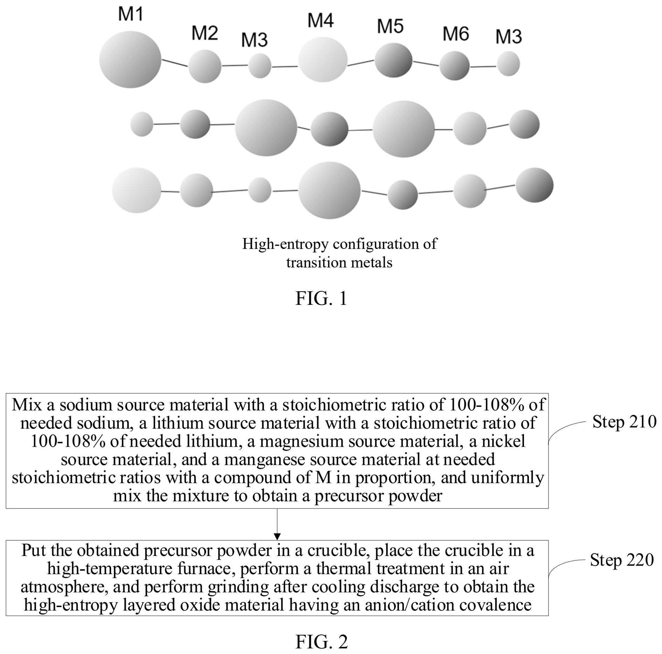

The schematic diagram of high-entropy configuration of the transition metal is shown in FIG. 1. M1, M2, M3, M4, M5, and M6 represent the transition metals Mn, Ni, Li, and Mg and the above two transition metal elements M. It may be seen that the transition metal layer at least contains 5 or more different transition metal elements, the elements in each layer are arranged irregularly, and the element types are repeatable.

By using the high-entropy configuration of the transition metals, during charging and discharging, since the types and arrangements of the transition metal elements have a high degree of disorder, part of elements is changed in valence and the other part of elements is not changed in valence during cycling, and the change of the unit cell volume may be alleviated to prevent lattice collapse to further relieve the structural change of the material, so that the high-entropy layered oxide material provided by the present invention shows excellent structural stability.

The high-entropy layered oxide material provided by the present invention is an O3-phase layered oxide material, with a space group of R$\overline{3}$m.

The high-entropy layered oxide material is used for a positive electrode active material of a sodium ion secondary battery; during initial cycle charging, the M transition metal ion with electrochemical activity loses an electron first, then an oxygen ion in a lattice loses an electron, and an average valance state of the oxygen ion is increased from -2 to a valance state between -2 and -1; during initial cycle discharging, the M transition metal ion with electrochemical activity and the oxygen ion with a relatively high valance state re-acquires the electron; from a second week, the oxygen ion and the M transition metal ion with electrochemical activity acquire and lose the electron during charging and discharging.

Embodiments of the present invention provide three methods for preparing the high-entropy layered oxide material by the solid phase method, the sol-gel method, and the spray drying method. The methods for preparing the material are described below.

The embodiment of the present invention provides a method for preparing a high-entropy layered oxide material having an anion/cation covalence, which is the solid phase method, as shown in FIG. 2, including :

step 210, mixing a sodium source material with a stoichiometric ratio of 100-108% of needed sodium, a lithium source material with a stoichiometric ratio of 100-108% of needed lithium, a magnesium source material, a nickel source material, and a manganese source material with a compound of M in proportion at needed stoichiometric ratios, and uniformly mixing the mixture to obtain a precursor powder,
where the sodium source material is sodium carbonate; the lithium source material includes lithium carbonate and/or lithium hydroxide; the magnesium source material includes magnesium oxide and/or magnesium carbonate; the nickel source material is nickel oxide; the manganese source material is manganese dioxide and/or manganese sesquioxide;
the compound of M includes an oxide of M and/or a carbonate of M, where M is a transition metal element, including one or more elements of Cu, Fe, Zn, Nb, Mo, Ru, Sb, Ta, Bi, Ti, La, and W;
the method of uniformly mixing is grinding mixing or ball-mill mixing.

Step 220, putting the obtained precursor powder in a crucible, placing the crucible in a high-temperature furnace, performing a thermal treatment in an air atmosphere, and performing grinding after cooling and discharging to obtain the high-entropy layered oxide material having an anion/cation covalence.

The thermal treatment includes: thermal treatment at a temperature of 800-1000°C for 2-24 h.

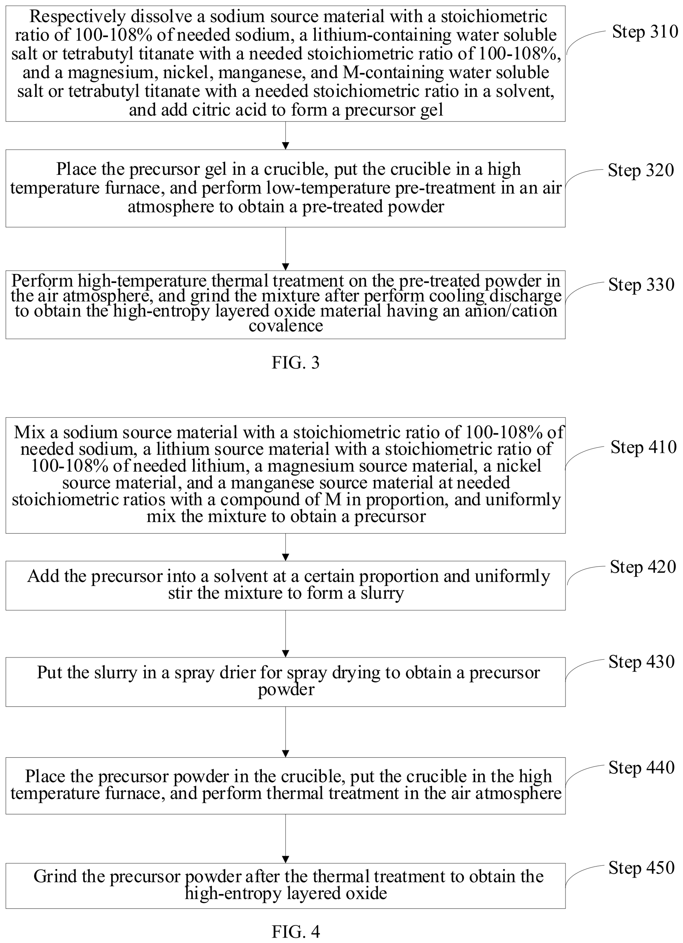

The embodiment of the present invention provides a method for preparing a high-entropy layered oxide material having an anion/cation covalence, which is the sol-gel method, as shown in FIG. 3, it includes the following steps:

Step 310, respectively dissolve a sodium source material with a stoichiometric ratio of 100-108% of needed sodium, a lithium-containing water soluble salt or tetrabutyl titanate with a needed stoichiometric ratio of 100-108%, and a magnesium, nickel, manganese, and M-containing water soluble salt or tetrabutyl titanate with a needed stoichiometric ratio in a solvent, and add citric acid to form a precursor gel,

where the sodium source material is one or more of sodium acetate, sodium nitrate, sodium carbonate, and sodium sulfate;
M is a transition metal element, including one or more elements of Cu, Fe, Zn, Nb, Mo, Ru, Sb, Ta, Bi, Ti, La, and W;
the solvent includes anhydrous ethanol or deionized water.

Step 320, placing the precursor gel in a crucible, putting the crucible in a high temperature furnace, and performing low-temperature pre-treatment in an air atmosphere to obtain a pre-treated powder,
where the low-temperature thermal pretreatment includes: pre-sintering at a temperature of 250-500°C for 2-6 hours.

Step 330, performing high-temperature thermal treatment on the pre-treated powder in the air atmosphere, and grinding the mixture after performing cooling and discharging to obtain the high-entropy layered oxide material having an anion/cation covalence,
where the high temperature thermal treatment includes: thermal treatment at a temperature of 800-1000°C for 2-24 hours.

The embodiment of the present invention provides a method for preparing a high-entropy layered oxide material having a cation-anion covalence change, which is the spray drying method, as shown in FIG. 4, it includes :

Step 410, mixing a sodium source material with a stoichiometric ratio of 100-108% of needed sodium, a lithium source material with a stoichiometric ratio of 100-108% of needed lithium, a magnesium source material, a nickel source material, a manganese source material and a compound of M at needed stoichiometric ratios in proportion, and uniformly mixing the mixture to obtain a precursor powder,
where the sodium source material is sodium carbonate; the lithium source material includes lithium carbonate and/or lithium hydroxide; the magnesium source material includes magnesium oxide and/or magnesium carbonate; the nickel source material is nickel oxide; the manganese source material is manganese dioxide and/or manganese sesquioxide;
the compound of M includes an oxide of M and/or a carbonate of M, where M is a transition metal element, including one or more elements of Cu, Fe, Zn, Nb, Mo, Ru, Sb, Ta, Bi, Ti, La, and W;
the method of uniformly mixing is grinding mixing or ball-mill mixing.

Step 420, adding the precursor into a solvent at a certain proportion and uniformly stirring the mixture to form a slurry,

where the solvent includes anhydrous ethanol or deionized water.

Step 430, putting the slurry in a spray drier for spray drying to obtain a precursor powder,

where an inlet temperature of the spray drier is 150-190°C, an outlet temperature is 70-100°C, and a feed rate is 200-600 mL/hour.

Step 440, placing the precursor powder in the crucible, putting the crucible in the high temperature furnace, and performing thermal treatment in the air atmosphere,

where the thermal treatment includes: thermal treatment at a temperature of 800-1000°C for 2-24 hours.

Step 450, grinding the precursor powder after the thermal treatment to obtain the high-entropy layered oxide.

The high-entropy layered oxide material having an anion/cation covalence provided by the embodiment of the present invention may be used as a positive electrode active material to prepare a slurry together with a conductive additive and a binder, and the slurry is coated on a current collector to obtain a positive electrode plate; the positive electrode plate, a negative electrode, a separator placed between the positive electrode and the negative electrode, and an electrolyte solution form a sodium ion secondary battery according to a conventional process. Specifically, the negative electrode is metal sodium or includes a negative electrode current collector, and a negative electrode material on the negative electrode current collector. The negative electrode material includes a negative electrode active substance, a conductive agent, and a binder.

The sodium ion secondary battery formed by the above components may be applied to a mobile device, means of transportation, and energy storage devices of renewable energy power generation, intelligent power grid peak regulation, distributed power stations, back-up power supplies or communication base stations.

To better understand the technical solution provided by the present invention, the preparation processes and characteristics of the high-entropy layered oxide material having an anion/cation covalence provided by the present invention are respectively described below with multiple specific examples.

Embodiment 1

The present invention provides a preparation process and a performance test of a high-entropy layered oxide material having an anion/cation covalence, which uses a solid phase method, and includes the following :

(1) $Na_2CO_3$ (analytically pure, 3% excess), $Li_2CO3$ (analytically pure, 3% excess), MgO (analytically pure), NiO (analytically pure), CuO (analytically pure), $MnO_2$ (analytically pure), and $TiO_2$ (analytically pure) were uniformly mixed at needed stoichiometric ratios to obtain a precursor powder; and

(2) the obtained precursor powder was put in a crucible, the crucible was placed in a high-temperature furnace, a thermal treatment was performed in an air atmosphere at 900°C for 15 h, and grinding was performed after cooling and discharging to obtain the high-entropy layered oxide material having an anion/cation covalence, where a chemical formula was $Na_{0.9}Li_{0.1}Mg_{0.1}Ni_{0.1}Cu_{0.1}Mn_{0.4}Ti_{0.2}O_2$.

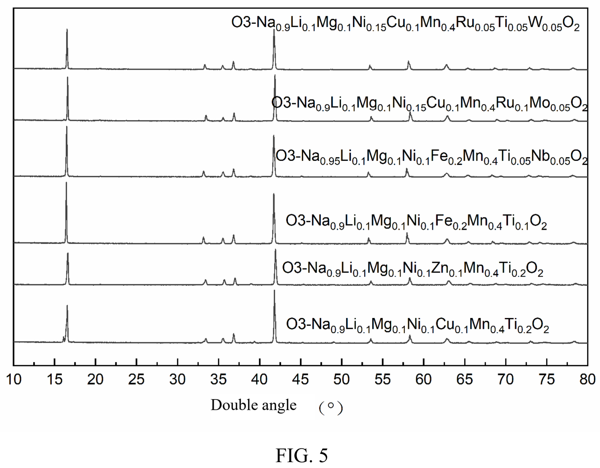

The XRD of the high-entropy layered oxide material $Na_{0.9}Li_{0.1}Mg_{0.1}Ni_{0.1}Cu_{0.1}Mn_{0.4}Ti_{0.2}O_2$ in this embodiment is shown in FIG. 5. Analyzed from the X-ray diffraction pattern, the crystal structure of $Na_{0.9}Li_{0.1}Mg_{0.1}Ni_{0.1}Cu_{0.1}Mn_{0.4}Ti_{0.2}O_2$ is an O3 phase layered oxide.

It can be seen from a (100) zone-axis corrected spherical aberration TEM image of the high-entropy layered oxide material $Na_{0.9}Li_{0.1}Mg_{0.1}Ni_{0.1}Cu_{0.1}Mn_{0.4}Ti_{0.2}O_2$ in this embodiment that due to different atomic masses, atomic points of different elements in the transition metal layer are disorderly arranged in terms of brightness and darkness, indicating a disorder arrangement of different transition metals.

The entropy of the high-entropy layered oxide material $Na_{0.9}Li_{0.1}Mg_{0.1}Ni_{0.1}Cu_{0.1}Mn_{0.4}Ti_{0.2}O_2$ in this embodiment is calculated:
$$S=-R(0.9\ln0.9+0.1\ln0.1+0.1\ln0.1+0.1\ln0.1+0.1\ln0.1+0.4\ln0.4+0.2\ln0.2)=1.70R,$$
which meets the requirement of the high-entropy material design.

The high-entropy layered oxide material prepared above is used as an active substance of the positive electrode material of the battery to prepare a sodium ion secondary battery, including the following :

The prepared $Na_{0.9}Li_{0.1}Mg_{0.1}Ni_{0.1}Cu_{0.1}Mn_{0.4}Ti_{0.2}O_2$ powder was mixed with acetylene black and a binder polyvinylidene fluoride (PVDF) at a mass ratio of 80: 10: 10, an appropriate amount of a N-methylpyrrolidone (NMP) solution was added, the mixture was ground in a normal temperature dried environment to form a slurry, then the slurry was uniformly coated on a current collector aluminum foil, and the current collector aluminum foil was dried under an infrared lamp and cut into a $(8\times8)mm^2$ plate. The plate was dried in a vacuum condition at 110°C for 10 hours and then transferred to a glovebox for later use.

Stimulation of battery assembly was performed in the glovebox in an Ar atmosphere, a metal sodium was taken as a counter electrode, a polycarbonate PC/ethylene carbonate EC/diethyl carbonate DEC (the volume ratio of PC: EC: DEC was 1: 1: 1) solution containing 1 mol/L of $NaClO_4$ was taken as an electrolyte solution, a GF/D glass fiber membrane was used as a battery separator, and the battery was assembled to a CR2032 button battery according to a conventional process.

A battery test method specifically includes: charging and discharging tests were performed at a current density of 20 mA/g by using a constant current charging and discharging mode, where a discharging cut-off voltage was 2.0V and a charging cut-off voltage was 4.2V.

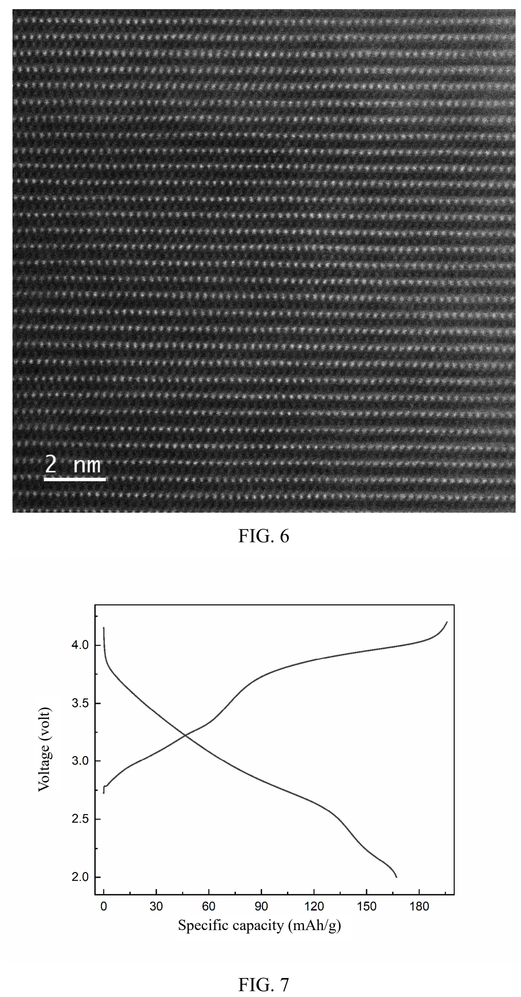

A initial cycle charging and discharging curve is shown in FIG. 7, and it can be seen that the initial cycle reversible capacity of the battery is 165 mAh/g.

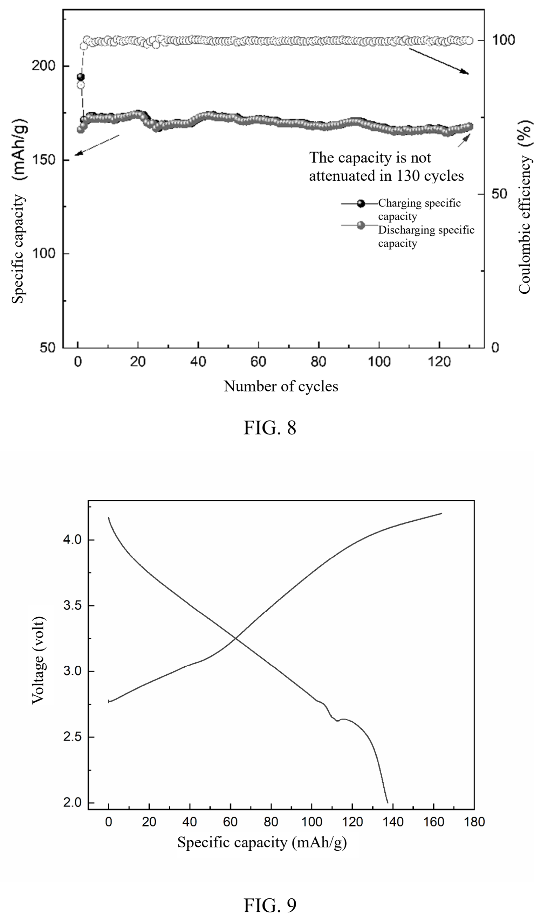

A cycle curve is shown in FIG. 8, and it can be seen that the capacity of the battery is nearly not attenuated after 130 cycles.

Embodiment 2

The present invention provides a preparation process and a performance test of a high-entropy layered oxide material having an anion/cation covalence, which uses a solid phase method, and includes:

(1) $Na_2CO_3$ (analytically pure, 3% excess), $Li_2CO_3$ (analytically pure, 3% excess), MgO (analytically pure), NiO (analytically pure), ZuO (analytically pure), $MnO_2$ (analytically pure), and $TiO_2$ (analytically pure) were uniformly mixed at needed stoichiometric ratios to obtain a precursor powder; and
(2) the obtained precursor powder was put in a crucible, the crucible was placed in a high-temperature furnace, a thermal treatment was performed in an air atmosphere at 900°C for 15 hours, and grinding was performed after cooling and discharging to obtain the high-entropy layered oxide material having an anion/cation covalence, where a chemical formula was $Na_{0.9}Li_{0.1}Mg_{0.1}Ni_{0.1}Zn_{0.1}Mn_{0.4}Ti_{0.2}O_2$.

The XRD of the high-entropy layered oxide material $Na_{0.9}Li_{0.1}Mg_{0.1}Ni_{0.1}Zn_{0.1}Mn_{0.4}Ti_{0.2}O_2$ in this embodiment is shown in FIG. 5. Analyzed from the X-ray diffraction pattern, the crystal structure of $Na_{0.9}Li_{0.1}Mg_{0.1}Ni_{0.1}Zn_{0.1}Mn_{0.4}Ti_{0.2}O_2$ is an O3 phase layered oxide.

The entropy of $Na_{0.9}Li_{0.1}Mg_{0.1}Ni_{0.1}Zn_{0.1}Mn_{0.4}Ti_{0.2}O_2$ prepared in this embodiment is calculated: S=-R(0.9ln0.9+0.1ln0.I+0.1ln0.1+0.1ln0.1+0.1ln0.1+0.4ln0.4+0.2ln0.2)=1.70R, which meets the definition of high entropy.

The high-entropy layered oxide material prepared above is used as an active substance of the positive electrode material of the battery to prepare a sodium ion secondary battery, and it is tested. The assembly process of the CR2032 button battery and the process of test are the same as those in embodiment 1.

A initial cycle charging and discharging curve is shown in FIG. 9, and it can be seen that the initial cycle charging capacity of the battery is 165.6mAh/g, and the initial cycle discharging capacity of the battery is 139 mAh/g.

Embodiment 3

The present invention provides a preparation process and a performance test of a high-entropy layered oxide material having an anion/cation covalence, which uses a solid phase method, and includes :

(1) $Na_2CO_3$ (analytically pure, 3% excess), $Li_2CO_3$ (analytically pure, 3% excess), MgO (analytically pure), NiO (analytically pure), $Fe_2O_3$ (analytically pure), $MnO_2$ (analytically pure), and $TiO_2$ (analytically pure) were uniformly mixed at needed stoichiometric ratios to obtain a precursor powder; and
(2) the obtained precursor powder was put in a crucible, the crucible was placed in a high-temperature furnace, a thermal treatment was performed in an air atmosphere at 900°C for 15 h, and grinding was performed after cooling and discharging to obtain the high-entropy layered oxide material having an anion/cation covalence, where a chemical formula was $Na_{0.9}Li_{0.1}Mg_{0.1}Ni_{0.1}Fe_{0.2}Mn_{0.4}Ti_{0.1}O_2$.

The XRD of the high-entropy layered oxide material $Na_{0.9}Li_{0.1}Mg_{0.1}Ni_{0.1}Fe_{0.2}Mn_{0.4}Ti_{0.1}O_2$ in this embodiment is shown in FIG. 5. Analyzed from the X-ray diffraction pattern, the crystal structure of $Na_{0.9}Li_{0.1}Mg_{0.1}Ni_{0.1}Fe_{0.2}Mn_{0.4}Ti_{0.1}O_2$ is an O3 phase layered oxide.

The entropy of $Na_{0.9}Li_{0.1}Mg_{0.1}Ni_{0.1}Fe_{0.2}Mn_{0.4}Ti_{0.1}O_2$ prepared in this embodiment is calculated: S=-R(0.9ln0.9+0.1ln0.1+0.1ln0.1+0.1ln0.1+0.2ln0.2+0.4ln0.4+0.1ln0.1)=1.70R, which meets the definition of high entropy.

The high-entropy layered oxide material prepared above is used as an active substance of the positive electrode material of the battery to prepare a sodium ion secondary battery, and it is tested. The assembly process of the CR2032 button battery and the specific process of test are the same as those in embodiment 1.

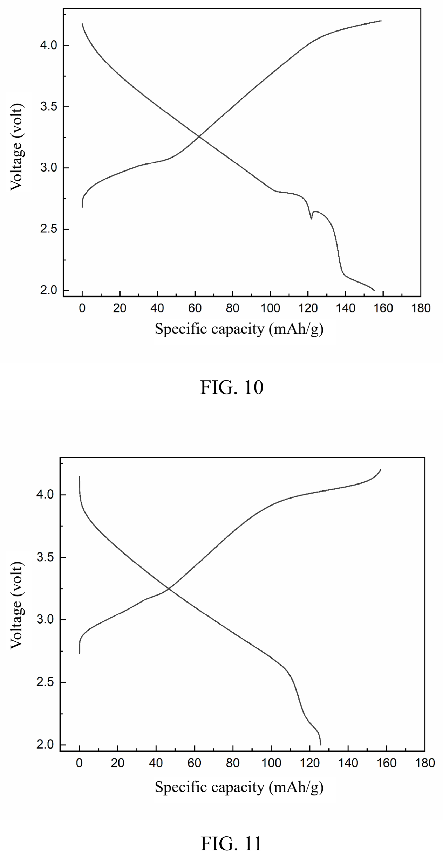

A initial cycle charging and discharging curve is shown in FIG. 10, and it can be seen that the initial cycle charging capacity of the battery is 166.2 mAh/g, and the initial cycle discharging capacity of the battery is 155 mAh/g.

Embodiment 4

The present invention provides a preparation process and a performance test of a high-entropy layered oxide material having an anion/cation covalence, which usesg a solid phase method, and includes :

(1) $Na_2CO_3$ (analytically pure, 3% excess), Li2CO3 (analytically pure, 3% excess), MgO (analytically pure), NiO (analytically pure), $Fe_2O_3$ (analytically pure), $MnO_2$ (analytically pure), $TiO_2$ (analytically pure), and $Nb_2O_5$ (analytically pure) were uniformly mixed at needed stoichiometric ratios to obtain a precursor powder; and

(2) the obtained precursor powder was put in a crucible, the crucible was placed in a high-temperature furnace, a thermal treatment was performed in an air atmosphere at 900°C for 15 hours, and grinding was performed after cooling and discharging to obtain the high-entropy layered oxide material having an anion/cation covalence, where a chemical formula was $Na_{0.95}Li_{0.1}Mg_{0.1}Ni_{0.1}Fe_{0.2}Mn_{0.4}Ti_{0.05}Nb_{0.05}O_2$.

The XRD of the high-entropy layered oxide material $Na_{0.95}Li_{0.1}Mg_{0.1}Ni_{0.1}Fe_{0.2}Mn_{0.4}Ti_{0.05}Nb_{0.05}O_2$ in this embodiment is shown in FIG. 5. Analyzed from the X-ray diffraction pattern, the crystal structure of $Na_{0.95}Li_{0.1}Mg_{0.1}Ni_{0.1}Fe_{0.2}Mn_{0.4}Ti_{0.05}Nb_{0.05}O_2$ is an O3 phase layered oxide.

The entropy of $Na_{0.95}Li_{0.1}Mg_{0.1}Ni_{0.1}Fe_{0.2}Mn_{0.4}Ti_{0.05}Nb_{0.05}O_2$ prepared in this embodiment is calculated: S=-R(0.95ln0.95+0.1ln0.1+0.1ln0.1+0.1ln0.1+0.2ln0.2+0.4ln0.4+0.05ln0.05+0.05ln0.05)=1.7 3R, which meets the definition of high entropy.

The high-entropy layered oxide material prepared above is used as an active substance of the positive electrode material of the battery to prepare a sodium ion secondary battery, and it is tested. The assembly process of the CR2032 button battery and the specific process of test are the same as those in embodiment 1.

A initial cycle charging and discharging curve is shown in FIG. 11, and it can be seen that the initial cycle charging capacity of the battery is 158.7 mAh/g, and the initial cycle discharging capacity of the battery is 128.5 mAh/g.

Embodiment 5

The present invention provides a preparation process and a performance test of a high-entropy layered oxide material having an anion/cation covalence, which uses a solid phase method, and includes the following :

(1) $Na_2CO_3$ (analytically pure, 3% excess), $Li_2CO_3$ (analytically pure, 3% excess), MgO (analytically pure), NiO (analytically pure), CuO (analytically pure), $MnO_2$ (analytically pure), $RuO_2$ (analytically pure), and $MoO_3$ (analytically pure) were uniformly mixed at needed stoichiometric ratios to obtain a precursor powder; and

(2) the obtained precursor powder was put in a crucible, the crucible was placed in a high-temperature furnace, a thermal treatment was performed in an air atmosphere at 900°C for 15 hoours, and grinding was performed after cooling and discharging to obtain the high-entropy layered oxide material having an anion/cation covalence, where a chemical formula was $Na_{0.9}Li_{0.1}Mg_{0.1}Ni_{0.15}Cu_{0.1}Mn_{0.4}Ru_{0.1}Mo_{0.05}O_2$.

The XRD of the high-entropy layered oxide material $Na_{0.9}Li_{0.1}Mg_{0.1}Ni_{0.15}Cu_{0.1}Mn_{0.4}Ru_{0.1}Mo_{0.05}O_2$ in this embodiment is shown in FIG. 5. Analyzed from the X-ray diffraction pattern, the crystal structure of $Na_{0.9}Li_{0.1}Mg_{0.1}Ni_{0.15}Cu_{0.1}Mn_{0.4}Ru_{0.1}Mo_{0.05}O_2$ is an O3 phase layered oxide.

The entropy of $Na_{0.9}Li_{0.1}Mg_{0.1}Ni_{0.15}Cu_{0.1}Mn_{0.4}Ru_{0.1}Mo_{0.05}O_2$ prepared in this embodiment is calculated: S=-R(0.9ln0.9+0.1ln0.1+0.1ln0.1+0.15ln0.15+0.1ln0.1+0.4ln0.4+0.1ln0.14+0.05ln0.05)=1.82 R, which meets the definition of high entropy.

The high-entropy layered oxide material prepared above is used as an active substance of the positive electrode material of the battery to prepare a sodium ion secondary battery, and it is tested. The assembly process of the CR2032 button battery and the specific process of test are the same as those in Embodiment 1.

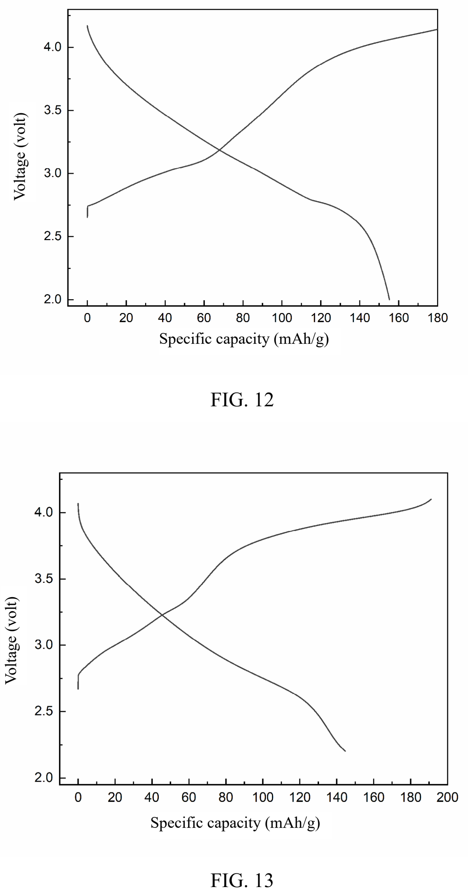

A initial cycle charging and discharging curve is shown in FIG. 12, and it can be seen that the initial cycle charging capacity of the battery is 186.5 mAh/g, and the initial cycle discharging capacity of the battery is 156 mAh/g.

Embodiment 6

The present invention provides a preparation process and a performance test of a high-entropy layered oxide material having an anion/cation covalence, which uses a solid phase method, and includes the following :

(1) $Na_2CO_3$ (analytically pure, 3% excess), Li2CO3 (analytically pure, 3% excess), MgO (analytically pure), NiO (analytically pure), CuO (analytically pure), $MnO_2$ (analytically pure), $RuO_2$ (analytically pure), $TiO_2$ (analytically pure), and $WO_3$ (analytically pure) were uniformly mixed at needed stoichiometric ratios to obtain a precursor powder; and

(2) the obtained precursor powder was put in a crucible, the crucible was placed in a high-temperature furnace, a thermal treatment was performed in an air atmosphere at 900°C for 15 hours, and grinding was performed after cooling and discharging to obtain the high-entropy layered oxide material having an anion/cation covalence, where a chemical formula was $Na_{0.9}Li_{0.1}Mg_{0.1}Ni_{0.15}Cu_{0.1}Mn_{0.4}Ru_{0.05}Ti_{0.05}W_{0.05}O_2$.

The XRD of the high-entropy layered oxide material $Na_{0.9}Li_{0.1}Mg_{0.1}Ni_{0.15}Cu_{0.1}Mn_{0.4}Ru_{0.05}Ti_{0.05}W_{0.05}O_2$ prepared in this embodiment is shown in FIG. 5. Analyzed from the X-ray diffraction pattern, the crystal structure of $Na_{0.9}Li_{0.1}Mg_{0.1}Ni_{0.15}Cu_{0.1}Mn_{0.4}Ru_{0.05}Ti_{0.05}W_{0.05}O_2$ is an O3 phase layered oxide.

The entropy of $Na_{0.9}Li_{0.1}Mg_{0.1}Ni_{0.15}Cu_{0.15}Mn_{0.4}Ru_{0.05}Ti_{0.05}W_{0.05}O_2$ prepared in this embodiment is calculated: S=-R(0.9ln0.9+0.1ln0.l+0.1ln0.l+0.15ln0.15+0.1ln0.l+0.4ln0.4+0.05ln0.05+0.05ln0.05+0.05ln0.05)=1.89R, which meets the definition of high entropy.

The high-entropy layered oxide material prepared above is used as an active substance of the positive electrode material of the battery to prepare a sodium ion secondary battery, which is tested. The assembly process of the CR2032 button battery and the process of test are the same as those in Embodiment 1.

A initial cycle charging and discharging curve is shown in FIG. 13, and it can be seen that the initial cycle charging capacity of the battery is 190 mAh/g, and the initial cycle discharging capacity of the battery is 148 mAh/g.

Embodiment 7

The present invention provides a preparation process and a performance test of a high-entropy layered oxide material having an anion/cation covalence, which uses a sol-gel method, and includes the following :

(1) $NaC_2H_3O_2$ (analytically pure, 3% excess), $LiC_2H_3O_2$ (analytically pure, 3% excess), $Mg(C_2H_3O_2)_2$, (analytically pure), $Ni(C_2H_3O_2)_2$ (analytically pure), $Cu(C_2H_3O_2)_2$ (analytically pure), $Mn(C_2H_3O_2)_2$ (analytically pure), and $Sb(C_2H_3O_2)_3$ (analytically pure) were weighed at stoichiometric ratios and dissolved in deionized water in sequence, and citric acid was added to form a precursor gel;
(2) the precursor gel was placed in a crucible, the crucible was put in a high temperature furnace, and the crucible was pre-sintered in an air atmosphere at 300°C for 3 oursh to obtain a pre-treated powder; and
(3) the pre-treated powder was thermally treated in the air atmosphere at 900°C for 5 hours, and grinding was performed after cooling and discharging to obtain the high-entropy layered oxide material having an anion/cation covalence, where a chemical formula was $NaLi_{0.1}Mg_{0.1}Ni_{0.1}Cu_{0.1}Mn_{0.5}Sb_{0.1}O_2$.

The entropy of $NaLi_{0.1}Mg_{0.1}Ni_{0.1}Cu_{0.1}Mn_{0.5}Sb_{0.1}O_2$ prepared in this embodiment is calculated: S=-R(1ln1+0.1ln0.1+0.1ln0.1+0.1ln0.1+0.1ln0.1+0.5ln0.5+0.1ln0.1)=1.5R, which meets the definition of high entropy.

Embodiment 8

The present invention provides a preparation process and a performance test of a high-entropy layered oxide material having an anion/cation covalence, which usesg a spray drying method, and includes the following :

(1) $Na_2CO_3$ (analytically pure, 3% excess), $Li_2CO_3$ (analytically pure, 3% excess), MgO (analytically pure), NiO (analytically pure), ZnO (analytically pure), $MnO_2$ (analytically pure), and $La_2O_3$ (analytically pure) were uniformly mixed at needed stoichiometric ratios to obtain a precursor;
(2) the precursor was added into anhydrous ethanol at a certain proportion and the mixture was uniformly stirred to form a slurry;
(3) the slurry was put in a spray drier for spray drying to obtain a precursor powder, where an inlet temperature of the spray drier was 160°C, an outlet temperature was 80°C, and a feed rate was 400 mL/h; and
(4) the precursor powder was put in a crucible, the crucible was placed in a high-temperature furnace, a thermal treatment was performed in an air atmosphere at 900°C for 10 hours, and grinding and cooling were performed to obtain the high-entropy layered oxide material having an anion/cation covalence, where a chemical formula was $NaLi_{0.1}Mg_{0.1}Ni_{0.1}Zn_{0.1}Mn_{0.5}La_{0.1}O_2$.

The entropy of $NaLi_{0.1}Mg_{0.1}Ni_{0.1}Zn_{0.1}Mn_{0.5}La_{0.1}O_2$ prepared in this embodiment is calculated: S=-R(1ln1+0.1ln0.l+0.1ln0.1+0.1ln0.1+0.1ln0.1+0.5ln0.5+0.1ln0.1)=1.5R, which meets the definition of high entropy.

The high-entropy layered oxide material having an anion/cation covalence provided in the embodiments of the present invention provides a relatively high specific capacity through the redox reaction of Li and Mg for activating lattice oxygen matching redox of highly disordered transition metals with interlayer electrochemical activity, so as to further improve the energy density and cycle stability. The sodium ion secondary battery applying the high-entropy layered oxide material provided by the present invention is appropriate in voltage range, relatively low in cost and high in energy density, and may be applied to large-scale energy storage devices of intelligent power grid peak regulation such as new energy power generation, back-up power supplies, and communication base stations or power sources of low-speed electric mobiles, electric ships, two wheel automobiles, and the like.

The above embodiments further describe the objectives, technical solutions, and beneficial effects in detail. It should be understood that the above is merely the specific implementations of the present invention and are not intended to limit the protection scope of the present invention. Any modifications, equivalent replacements, improvements, etc. made within the spirit and principle of the present invention shall be included in the protection scope of the present invention.

**Claims**

1. A high-entropy layered oxide material having an anion/cation covalence, wherein a chemical general formula of the high-entropy layered oxide material is as follows: $Na_a[Li_bMg_cNi_aMn_eM_f]O_{2+\beta}$,

    where M is a transition metal element, comprising one or more elements of Cu, Fe, Zn, Nb, Mo, Ru, Sb, Ta, Bi, Ti, La, and W; a, b, c, d, e, f, and $2+\beta$ are respectively mole percentages occupied by corresponding elements; a relationship among a, b, c, d, e, f, and $2+\beta$ satisfies $b+c+d+e+f=1$ and $a+b+2c+2d+4e+mf=2(2+\beta)$, where $0.85 \leq a \leq 1$; $0.05 \leq b \leq 0.2$; $0.05 \leq c \leq 0.2$; $0.05 \leq d \leq 0.2$; $0.2 \leq e \leq 0.6$; $0.05 \leq f \leq 0.2$; $0 \leq \beta \leq 0.1$, m is a valance state of M;
    a, b, c, d, e, and f satisfy a definition of a high entropy, i.e., satisfy a formula:

    $$S = -R\sum_{i=1}^{N} x_i \ln x_i \geq 1.5R$$

    where R is a gas constant, $N \geq 6$ and $x_i$ is any value of a, b, c, d, e, and f;
    the high-entropy layered oxide material is an O3-phase layered oxide material, with a space group of $R\overline{3}m$; and
    the high-entropy layered oxide material is used for a positive electrode active material of a sodium ion secondary battery; during initial cycle charging, the M transition metal ion with electrochemical activity loses an electron first, then an oxygen ion in a lattice loses an electron, and an average valance state of the oxygen ion is increased from -2 to a valance state between -2 and -1; during initial cycle discharging, the M transition metal ion with electrochemical activity and the oxygen ion with a relatively high valance state re-acquires the electron; from a second cycle, the oxygen ion and the M transition metal ion with electrochemical activity acquire and lose the electron during charging and discharging.

2. The method for preparing the high-entropy layered oxide material having an anion/cation covalence according to claim 1, wherein the method is a solid phase method, comprising:

    mixing a sodium source material with a stoichiometric ratio of 100-108% of needed sodium, a lithium source material with a stoichiometric ratio of 100-108% of needed lithium, a magnesium source material, a nickel source material, and a manganese source material with a compound of M in proportion at needed stoichiometric ratios, and uniformly mixing the mixture to obtain a precursor powder; and
putting the obtained precursor powder in a crucible, placing the crucible in a high-temperature furnace, performing a thermal treatment in an air atmosphere, and performing grinding after cooling and discharging to obtain the high-entropy layered oxide material having an anion/cation covalence.

3. The method according to claim 2, wherein the sodium source material is sodium carbonate;

    the lithium source material comprises lithium carbonate and/or lithium hydroxide;
    the magnesium source material comprises magnesium oxide and/or magnesium carbonate;
    the nickel source material is nickel oxide;
    the manganese source material is manganese dioxide and/or manganese sesquioxide; and
    the compound of M comprises an oxide of M and/or a carbonate of M, wherein M is a transition metal element, comprising one or more elements of Cu, Fe, Zn, Nb, Mo, Ru, Sb, Ta, Bi, Ti, La, and W;
    the method of uniformly mixing is grinding mixing or ball-mill mixing; and
    the thermal treatment comprises: thermal treatment at a temperature of 800-1000°C for 2-24 hours.

4. The method for preparing the high-entropy layered oxide material having an anion/cation covalence according to claim 1, wherein the method is a sol-gel method, comprising:

    respectively dissolving a sodium source material with a stoichiometric ratio of 100-108% of needed sodium, a lithium-containing water soluble salt or tetrabutyl titanate with a needed stoichiometric ratio of 100-108%, and a magnesium, nickel, manganese, and M-containing water soluble salt or tetrabutyl titanate with a needed stoichiometric ratio in a solvent, and adding citric acid to form a precursor gel;
    placing the precursor gel in a crucible, putting the crucible in a high temperature furnace, and performing low-temperature pre-treatment in an air atmosphere to obtain a pre-treated powder; and
    performing high-temperature thermal treatment on the pre-treated powder in the air atmosphere, and grinding the mixture after performing cooling and discharging to obtain the high-entropy layered oxide material having an anion/cation covalence.

5. The method according to claim 4, wherein the sodium source material is one or more of sodium acetate, sodium nitrate, sodium carbonate, and sodium sulfate;

M is a transition metal element, comprising one or more elements of Cu, Fe, Zn, Nb, Mo, Ru, Sb, Ta, Bi, Ti, La, and W;

the solvent comprises anhydrous ethanol or deionized water;

the low-temperature thermal treatment comprises: pre-sintering at a temperature of 250-500°C for 2-6 hours; and

the high-temperature thermal treatment comprises: thermal treatment at a temperature of 800-1000°C for 2-24 hours.

6. The method for preparing the high-entropy layered oxide material having an anion/cation covalence according to claim 1, wherein the method is a spray drying method, comprising:

mixing a sodium source material with a stoichiometric ratio of 100-108% of needed sodium, a lithium source material with a stoichiometric ratio of 100-108% of needed lithium, a magnesium source material, a nickel source material, and a manganese source material with a compound of M at needed stoichiometric ratios in proportion, and uniformly mixing the mixture to obtain a precursor;

adding the precursor into a solvent at a certain proportion and uniformly stirring the mixture to form a slurry;

putting the slurry in a spray drier for spray drying to obtain a precursor powder;

placing the precursor powder in the crucible, putting the crucible in the high temperature furnace, and performing thermal treatment in the air atmosphere; and

grinding the precursor powder after the thermal treatment to obtain the high-entropy layered oxide material.

7. The method according to claim 6, wherein the sodium source material is sodium carbonate;

the lithium source material comprises lithium carbonate and/or lithium hydroxide;

the magnesium source material comprises magnesium oxide and/or magnesium carbonate;

the nickel source material is nickel oxide;

the manganese source material is manganese dioxide and/or manganese sesquioxide; and

the compound of M comprises an oxide of M and/or a carbonate of M, wherein M is a transition metal element, comprising one or more elements of Cu, Fe, Zn, Nb, Mo, Ru, Sb, Ta, Bi, Ti, La, and W;

the method of uniformly mixing is grinding mixing or ball-mill mixing; and

the solvent comprises anhydrous ethanol or deionized water;

the thermal treatment method comprises: thermal treatment at a temperature of 800-1000°C for 2-24 hours;

an inlet temperature of the spray drier is 150-190°C, an outlet temperature is 70-100°C, and a feed rate is 200-600 mL/hour.

8. A positive electrode plate of a sodium ion secondary battery, comprising a current collector, a conductive additive and a binder coated on the current collector, and the high-entropy layered oxide material having an anion/cation covalence according to claim 1.

9. A sodium ion secondary battery, comprising the positive electrode plate according to according to claim 8.

10. Use of the sodium ion secondary battery according to claim 9, wherein the sodium ion secondary battery is applied to a mobile device, means of transportation, and energy storage devices of renewable energy power generation, intelligent power grid peak regulation, distributed power stations, back-up power supplies or communication base stations.

High-entropy configuration of
transition metals

FIG. 1

| | |
|---|---|
| Mix a sodium source material with a stoichiometric ratio of 100-108% of needed sodium, a lithium source material with a stoichiometric ratio of 100-108% of needed lithium, a magnesium source material, a nickel source material, and a manganese source material at needed stoichiometric ratios with a compound of M in proportion, and uniformly mix the mixture to obtain a precursor powder | Step 210 |
| Put the obtained precursor powder in a crucible, place the crucible in a high-temperature furnace, perform a thermal treatment in an air atmosphere, and perform grinding after cooling discharge to obtain the high-entropy layered oxide material having an anion/cation covalence | Step 220 |

FIG. 2

| Respectively dissolve a sodium source material with a stoichiometric ratio of 100-108% of needed sodium, a lithium-containing water soluble salt or tetrabutyl titanate with a needed stoichiometric ratio of 100-108%, and a magnesium, nickel, manganese, and M-containing water soluble salt or tetrabutyl titanate with a needed stoichiometric ratio in a solvent, and add citric acid to form a precursor gel | Step 310 |

↓

| Place the precursor gel in a crucible, put the crucible in a high temperature furnace, and perform low-temperature pre-treatment in an air atmosphere to obtain a pre-treated powder | Step 320 |

↓

| Perform high-temperature thermal treatment on the pre-treated powder in the air atmosphere, and grind the mixture after perform cooling discharge to obtain the high-entropy layered oxide material having an anion/cation covalence | Step 330 |

FIG. 3

| Mix a sodium source material with a stoichiometric ratio of 100-108% of needed sodium, a lithium source material with a stoichiometric ratio of 100-108% of needed lithium, a magnesium source material, a nickel source material, and a manganese source material at needed stoichiometric ratios with a compound of M in proportion, and uniformly mix the mixture to obtain a precursor | Step 410 |

↓

| Add the precursor into a solvent at a certain proportion and uniformly stir the mixture to form a slurry | Step 420 |

↓

| Put the slurry in a spray drier for spray drying to obtain a precursor powder | Step 430 |

↓

| Place the precursor powder in the crucible, put the crucible in the high temperature furnace, and perform thermal treatment in the air atmosphere | Step 440 |

↓

| Grind the precursor powder after the thermal treatment to obtain the high-entropy layered oxide | Step 450 |

FIG. 4

FIG. 5

FIG. 6

FIG. 7

FIG. 8

FIG. 9

FIG. 10

FIG. 11

FIG. 12

FIG. 13

## INTERNATIONAL SEARCH REPORT

| International application No. |
|---|
| **PCT/CN2023/106852** |

| A. | CLASSIFICATION OF SUBJECT MATTER |
|---|---|

H01M4/36(2006.01)i; H01M4/485(2010.01)i; H01M4/505(2010.01)i; H01M4/525(2010.01)i; H01M10/054(2010.01)i

According to International Patent Classification (IPC) or to both national classification and IPC

| B. | FIELDS SEARCHED |
|---|---|

Minimum documentation searched (classification system followed by classification symbols)

IPC: H01M4/-; H01M10/-

Documentation searched other than minimum documentation to the extent that such documents are included in the fields searched

Electronic data base consulted during the international search (name of data base and, where practicable, search terms used)

CNABS; DWPI; CNKI; WEB OF SCIENCE: 高熵, 熵值, 层状, 氧化物, Na, Li, Mg, Ni, Mn, 过渡金属, 钠离子电池, 正极, 溶胶凝胶, 喷雾干燥, high, entrop+, layer+, oxide?, transition metal?, sodium ion, batter+, positive electrode?, sol, gel, spray, dry+

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 115064657 A (CENTRAL SOUTH UNIVERSITY) 16 September 2022 (2022-09-16) embodiment 3, and claims 8-10 | 1-10 |
| Y | CN 114204005 A (BEIJING UNIVERSITY OF TECHNOLOGY) 18 March 2022 (2022-03-18) description, paragraph 0006 | 1-10 |
| Y | CN 114883522 A (NANJING UNIVERSITY OF POSTS AND TELECOMMUNICATIONS) 09 August 2022 (2022-08-09) description, paragraphs 0011-0014 | 1-10 |
| A | CN 115207341 A (XIANGTAN UNIVERSITY) 18 October 2022 (2022-10-18) entire description | 1-10 |
| A | WO 2020232572 A1 (LIAONING STARRY SKY SODIUM-ION BATTERY CO., LTD.) 26 November 2020 (2020-11-26) entire description | 1-10 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 November 2023** | **24 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/106852**

| Patent document<br>cited in search report | | | Publication date<br>(day/month/year) | Patent family member(s) | Publication date<br>(day/month/year) |
|---|---|---|---|---|---|
| CN | 115064657 | A | 16 September 2022 | None | |
| CN | 114204005 | A | 18 March 2022 | None | |
| CN | 114883522 | A | 09 August 2022 | None | |
| CN | 115207341 | A | 18 October 2022 | None | |
| WO | 2020232572 | A1 | 26 November 2020 | None | |

Form PCT/ISA/210 (patent family annex) (July 2022)

**REFERENCES CITED IN THE DESCRIPTION**

**Patent documents cited in the description**

• CN 202310435218